# EUROPÄISCHE PATENTSCHRIFT

(11) **EP 1 022 836 B1**
(45) Veröffentlichungstag und Bekanntmachung des Hinweises auf die Patenterteilung: **16.10.2002**
(21) Anmeldenummer: 00110095.7
(22) Anmeldetag: 12.04.1997
(51) Int. Cl.: H02G 15/04, H02G 3/06, H01R 4/64

(54) **Kabelverschraubung**
Cable gland
Presse-étoupe

(30) Priorität: 19.04.1996 DE 19615602
(43) Veröffentlichungstag der Anmeldung: 26.07.2000
(62) Teilanmeldung aus: 97106047.0
(73) Patentinhaber: U.I. Lapp GmbH, 70565 Stuttgart (DE)
(72) Erfinder: Schwarz, Manfred, 71263 Weil der Stadt (DE); Drotleff, Rolf, 71263 Weil der Stadt (DE)
(74) Vertreter: Hoeger, Stellrecht & Partner

(56) Entgegenhaltungen:
- EP-A- 0 093 524
- EP-A- 0 598 261
- EP-A- 0 704 940
- DE-C- 3 708 493
- GB-A- 2 233 838

## Beschreibung

Die Erfindung betrifft eine Kabelverschraubung umfassend einen mit einem Gehäuse verbindbaren Stutzen mit einer gehäuseseitigen Öffnung, eine in ein Inneres des Stutzens einsetzbare Dichtung sowie ein mit dem Stutzen verschraubbares Druckelement, welches auf die Dichtung im Sinne eines Anlegens derselben an ein durch die Kabelverschraubung hindurchgeführtes Kabel einwirkt, ein in dem Stutzen angeordnetes Schirmkontaktelement, welches in elektrischem Kontakt mit dem Stutzen steht und mittels eines in Richtung des durchgeführten Kabels reichenden Kontaktbügels einen einen Innenleiterbereich des Kabels umschließenden Kabelschirm mit einer ersten Kontaktstelle zu kontaktieren vermag.

Derartige Kabelverschraubungen sind aus der GB 2 233 838 A1 bekannt. Bei diesen dient die Dichtung dazu, das Kabel einerseits dicht zu umschließen und teilweise kraftschlüssig gegen Zug zu fixieren.

Bei diesen Kabelverschraubungen ist vorgesehen, daß bei Verwendung von Kabeln mit einem Kabelschirm eine mittelbare Verbindung zwischen dem Stutzen und dem am Kabelschirm anliegenden Schirmkontaktelement herstellbar ist.

Aus der DE 37 084 93 C1 ist bekannt, Kontaktfinger eines Schirmkontaktelements in eine Steckhülse einzubetten.

Der Erfindung liegt daher die Aufgabe zugrunde, eine Kabelverschraubung der gattungsgemäßen Art derart zu verbessern, daß diese möglichst kostengünstig und funktionssicher herstellbar ist.

Diese Aufgabe wird bei einer Kabelverschraubung der eingangs beschriebenen Art erfindungsgemäß dadurch gelöst, daß das Schirmkontaktelement an einem in den Stutzen einführbaren Einsatzteil aus Kunststoff gehalten ist, daß das Schirmkontaktelement auf einer radial außenliegenden zylindrischen Fläche des Einsatzteils aufliegt, daß das Schirmkontaktelement mittels des Einsatzteils in dem Stutzen lokal fixierbar ist und daß das Schirmkontaktelement unmittelbar mit dem Stutzen elektrisch verbindbar ist.

Der Vorteil der erfindungsgemäßen Lösung ist darin zu sehen, daß durch das derart im Stutzen angeordnete Schirmkontaktelement eine unmittelbare elektrische Verbindung zwischen dem Stutzen und dem den Innenleiterbereich des Kabels umschließenden Kabelschirm über das Schirmkontaktelement herstellbar ist, wobei der Kabelschirm hierzu nicht vom Innenleiterbereich des Kabels gelöst werden muß, sondern lediglich ein den Kabelschirm umgebender Kabelaußenmantel zu entfernen ist.

Mit dieser Lösung ist auch bei Kabeln mit unterschiedlichem Durchmesser in besonders einfacher Weise ein elektrischer Kontakt zwischen dem Kabelschirm und dem Stutzen herstellbar, nämlich dadurch, daß das Kabelende mit teilweise um den Kabelschirm entferntem Kabelaußenmantel lediglich in die Kabelverschraubung eingeführt werden muß und durch die Dichtung fixiert werden kann, wobei der Kontaktbügel auch bei unterschiedlicher vom Durchmesser der Kabel abhängiger Position des Kabelschirms eine zuverlässige Kontaktierung ermöglicht.

Ferner hat eine derartige Lösung den Vorteil, daß über das kostengünstig aus Kunststoff herstellbare Einsatzteil in einfacher Weise eine Positionierung des Schirmkontaktelements im Stutzen erreichbar ist.

Außerdem ist erfindungsgemäß das Einsatzteil aus Kunststoff in einfacher Weise dazu ausgebildet werden, eine definierte Positionierung des Schirmkontaktelements in dem Stutzen zu erreichen.

Vorzugsweise ist das Schirmkontaktelement aus entsprechend gebogenem metallischem Flachmaterial hergestellt.

Der Kontaktbügel kann dabei prinzipiell die unterschiedlichsten Beweglichkeiten aufweisen. Besonders vorteilhaft ist es, wenn der Kontaktbügel in einer ungefähr parallel zu einer Längsachse der Kabelverschraubung verlaufenden Ebene bewegbar ist. Unter dieser Ebene ist die Ebene zu verstehen, in welcher sich der Kontaktbügel in allen durch die Bewegbarkeit bedingten Stellungen erstreckt.

Prinzipiell wäre es ausreichend, wenn das Schirmkontaktelement einen einzigen Kontaktbügel aufweist. Besonders vorteilhaft ist es jedoch, wenn das Schirmkontaktelement mehrere Kontaktbügel aufweist, welche beispielsweise in konstanten Winkelabständen um die Längsachse der Kabelverschraubung herum angeordnet sind.

Hinsichtlich der Herstellung einer elektrischen Verbindung zwischen dem Kontaktbügel und dem Stutzen sind die unterschiedlichsten Lösungen denkbar. So wäre es beispielsweise denkbar, daß der Kontaktbügel über ein diesen tragendes Element mit dem Stutzen elektrisch verbunden ist.

Noch vorteilhafter ist es jedoch, wenn der Kontaktbügel den Stutzen mit einer zweiten Kontaktstelle unmittelbar kontaktiert, so daß eine möglichst direkte Verbindung zwischen dem Kabelschirm und dem Stutzen herstellbar ist.

Besonders vorteilhaft ist es dabei, wenn der Kontaktbügel eine knieähnliche Umbiegung aufweist, die zwischen der ersten und der zweiten Kontaktstelle liegt.

Die knieähnliche Umbiegung läßt sich besonders vorteilhaft zur Erzeugung einer Federwirkung ausnutzen, nämlich dadurch, daß der Kontaktbügel zumindest im Bereich der knieähnlichen Umbiegung aus einem federelastischen Material hergestellt ist.

Eine derartige knieähnliche Umbiegung dient dann in vorteilhafter Weise dazu, den Kontaktbügel sowohl im Bereich der ersten Kontaktstelle als auch im Bereich der zweiten Kontaktstelle mit ausreichender Kraft zur Herstellung eines guten elektrischen Kontakts an dem Kabelschirm bzw. dem Stutzen anzulegen.

Um ein einfaches Einschieben des Kabels mit entferntem Kabelmantel, jedoch mit noch den Innenleiterbereich umschließendem und auf diesem aufliegendem Kabelschirm bei Erzeugung eines möglichst guten elektrischen Kontakts im Bereich der ersten Kontaktstelle zu erreichen, ist vorzugsweise vorgesehen, daß der Kontaktbügel im Bereich der ersten Kontaktstelle eine kufenähnliche. Umbiegung aufweist, welche ein durch den Kontaktbügel bedingtes Ablösen des Kabelschirms beim Einschieben desselben verhindert.

Um ferner einen möglichst guten elektrischen Kontakt im Bereich der zweiten Kontaktstelle zu erhalten, ist vorzugsweise vorgesehen, daß der Kontaktbügel im Bereich der zweiten Kontaktstelle eine Umbiegung aufweist, welche dazu dient, auch bei geringen Anpresskräften einen möglichst guten elektrischen Kontakt durch eine möglichst kleine Kontaktfläche zu erhalten.

Im Zusammenhang mit der bisherigen Beschreibung der einzelnen Ausführungsbeispiele wurde lediglich darauf eingegangen, daß das Schirmkontaktelement einen oder mehrere Kontaktbügel aufweist. Besonders vorteilhaft ist es jedoch, wenn das Schirmkontaktelement ein Trägerteil aufweist, an welchem die Kontaktbügel gehalten sind.

Vorzugsweise ist dabei das Trägerteil als in Form eines Rings gebogenes Teil ausgebildet. Besonders zweckmäßig herstellbar, insbesondere zusammen mit den Kontaktbügeln, ist das Trägerteil dann, wenn es aus einem Flachmaterialstreifen gebogen ist, welcher die Form eines offenen Rings aufweist.

Ein hinsichtlich der Ausbildung des Schirmkontaktelements besonders vorteilhaftes Ausführungsbeispiel sieht vor, daß der Kontaktbügel relativ zum Trägerteil bewegbar ist und daß das Trägerteil relativ zum Stutzen fixiert angeordnet ist. Ein derartiges Schirmkontaktelement hat den Vorteil, daß einerseits über das Trägerteil die Möglichkeit besteht, die Kontaktbügel exakt im Stutzen zu positionieren, andererseits die Kontaktbügel relativ zum Trägerteil in ausreichendem Maße beweglich sind, um auch bei variierender Dicke der Kabel stets einen guten elektrischen Kontakt zwischen dem Kabelschirm und dem Stutzen herzustellen.

Ein besonders vorteilhaftes Ausführungsbeispiel sieht vor, daß das Trägerteil im Abstand von einer Innenwand des Stutzens liegt und der Kontaktbügel von dem Trägerteil ausgehend zu einer und dann zur anderen Kontaktstelle verläuft, so daß der Kontaktbügel ausgehend von dem Trägerteil sowohl in Richtung der Innenwand des Stutzens als auch in Richtung des Kabelschirms ausreichend Bewegungsraum aufweist, um unterschiedliche Abmessungen durch elastische Deformation auszugleichen.

Ein besonders einfaches Montieren des am Einsatzteil gehaltenen Schirmkontaktelements sieht vor, daß dieses von einem gehäuseseitigen Ende des Stutzens in diesen einsetzbar ist, da damit ein Zusammenbau der Kabelverschraubung völlig unabhängig von dem Vorhandensein oder Nichtvorhandensein des Schirmkontaktelements möglich ist.

Besonders zweckmäßig ist es dabei, wenn das Schirmkontaktelement mittels des Einsatzteils in dem Stutzen lokal fixierbar ist, so daß das Schirmkontaktelement in einfacher Weise dazu ausgebildet werden kann, eine definierte Positionierung des Schirmkontaktelements in dem Stutzen zu erreichen.

Besonders zweckmäßig ist es hierbei, wenn das Schirmkontaktelement über eine Rastverbindung des Einsatzteils am Stutzen fixierbar ist.

Ein besonders einfaches Einsetzen des Einsatzteils, insbesondere unabhängig von der Dichtung, ist dann möglich, wenn das Einsatzteil von einem gehäuseseitigen Ende des Stutzens in diesen einsetzbar ist, da damit ein Zusammenbau der Kabelverschraubung völlig unabhängig von dem Vorhandensein oder Nichtvorhandensein des Einsatzteils mit dem Schirmkontaktelement möglich ist.

Besonders zweckmäßig ist es hierbei, wenn das Einsatzteil über eine Rastverbindung am Stutzen fixierbar ist.

Das Schirmkontaktelement läßt sich besonders günstig dadurch positionieren, daß dieses durch das an dem Einsatzteil sitzende Trägerteil am Einsatzteil gehalten ist.

Besonders günstig ist es, wenn das Schirmkontaktelement mit einem Trägerteil auf einem Ringkörper des Einsatzteils mit einer radial außenliegenden Fläche aufliegt.

Ferner ist es günstig, wenn das auf der radial außenliegenden Fläche aufliegende Trägerteil in Form eines offenen Rings ausgebildet ist.

Eine weitere günstige Lösung sieht vor, daß sich von dem Trägerteil ausgehend zwischen Fingern des Einsatzteils liegende Kontaktbügel erstrecken.

Vorzugsweise ist dabei vorgesehen, daß das Trägerteil an dem Einsatzteil kraftschlüssig fixiert ist.

Die erfindungsgemäße Kabelverschraubung kann hinsichtlich der Ausbildung der Dichtung in unterschiedlichster Art und Weise ausgeführt sein. So ist es beispielsweise denkbar, als Druckelement eine Druckschraube und als Dichtung eine durch Pressung in axialer Richtung deformierbare und an einem einen Durchlaß durchsetzenden Kabel zur Anlage bringbare Dichtung einzusetzen.

Alternativ dazu ist bei einem vorteilhaften Ausführungsbeispiel vorgesehen, daß in einem Inneren des Stutzens ein Dichtungsträger mit einem an diesem gehaltenen Lamellenkorb eingesetzt ist und daß in dem Lamellenkorb eine Dichtung liegt.

In diesem Fall ist das Druckelement vorzugsweise als den Lamellenkorb übergreifende Hutmutter ausgebildet, welche auf den Lamellenkorb so einwirkt, daß dieser die Dichtung in Richtung einer Längsachse der Kabelverschraubung verpreßt, um die Dichtung an einem Kabelaußenmantel des hindurchgeführten Kabels zur Anlage zu bringen.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine perspektivische, teilweise aufgeschnittene Darstellung eines Ausführungsbeispiels der erfindungsgemäßen Kabelverschraubung und
- Fig. 2: einen halbseitigen Längsschnitt durch das in Fig. 1 dargestellte Ausführungsbeispiel.

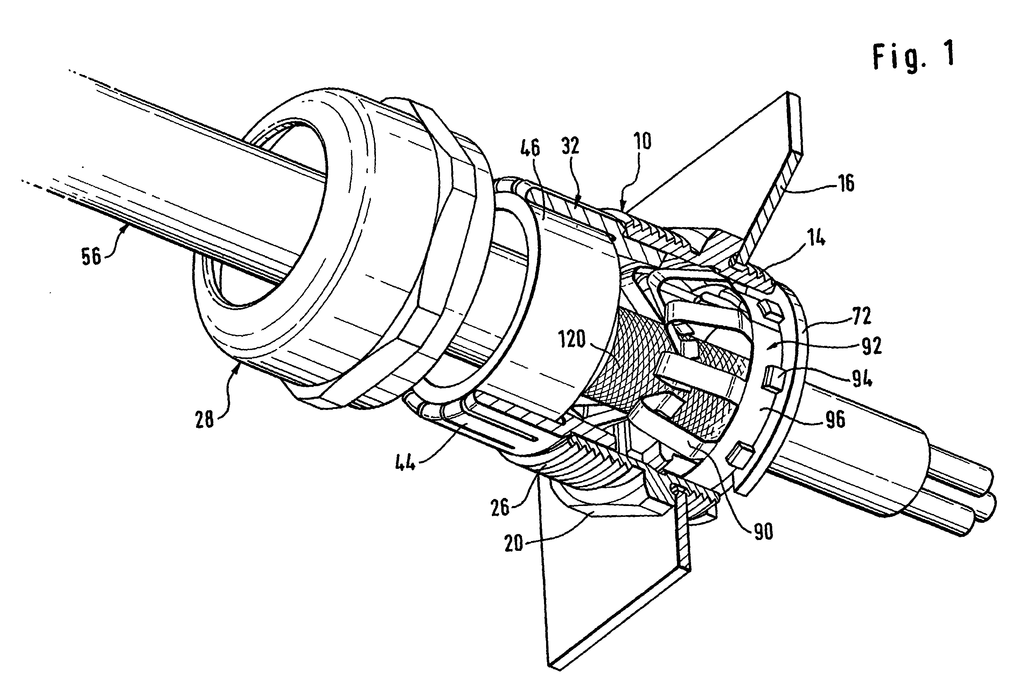

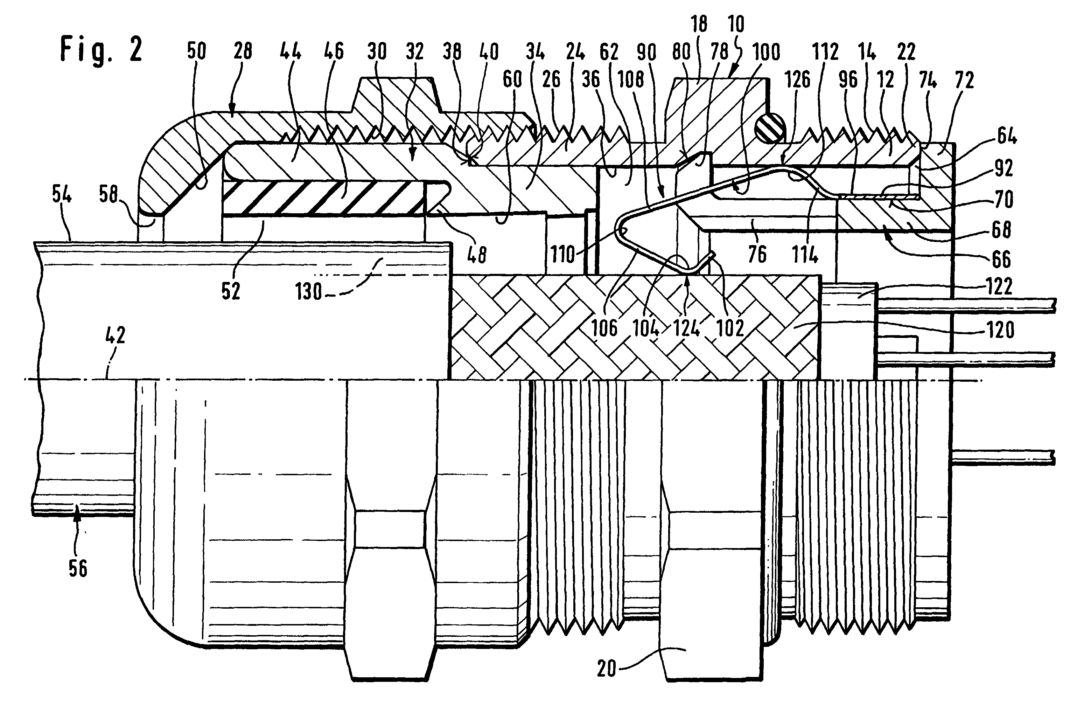

Ein in Fig. 1 und 2 dargestelltes Ausführungsbeispiel einer erfindungsgemäßen Kabelverschraubung umfaßt einen als Ganzes mit 10 bezeichneten elektrisch leitend ausgebildeten Stutzen, welcher einen zylindrischen Ansatz 12 mit einem Außengewinde 14 aufweist, mit welchem der Stutzen 10 in eine Wand 16 beispielsweise eines Gehäuses einschraubbar ist.

Der Stutzen umfaßt ferner einen Schlüsselflächenabschnitt 18, welcher mit Schlüsselflächen 20 versehen ist und auf einer einem gehäuseseitigen Ende 22 des zylindrischen Ansatzes 12 gegenüberliegenden Seite unmittelbar an den zylindrischen Ansatz 12 anschließt.

Auf einer dem zylindrischen Ansatz 12 gegenüberliegenden Seite des Schlüsselflächenabschnitts 18 des Stutzens 10 ist ein Zylinderabschnitt 24 vorgesehen, welcher ein Außengewinde 26 trägt. Auf das Außengewinde 26 ist eine als Ganzes mit 28 bezeichnete Hutmutter 28 mit ihrem Innengewinde 30 aufschraubbar.

Der Zylinderabschnitt 24 dient zur Aufnahme eines als Ganzes mit 32 bezeichneten Dichtungsträgers welcher mit einem Halteansatz 34 in den Zylinderabschnitt 24 eingreift und an einer inneren Zylinderfläche 36 desselben geführt ist. Ferner stützt sich der Dichtungsträger 32 mit einer Flanschfläche 38 auf einer dem Schlüsselflächenabschnitt 18 abgewandten Stirnseite 40 der Zylinderabschnitts 24 ab und ist dadurch in Richtung einer Längsachse 42 der erfindungsgemäßen Kabelverschraubung gegen eine Verschiebung in Richtung des Schlüsselflächenabschnitts 18 fixiert.

Der Dichtungsträger 32 umfaßt ferner einen Lamellenkorb 44, der seinerseits eine Dichtung 46 umschließt, wobei die Dichtung 46 ferner durch einen inneren Ansatz 48 gegen eine Verschiebung in Richtung der Längsachse 42 zum Schlüsselflächenabschnitt 18 hin fixierbar ist.

Der Lamellenkorb 44 ist seinerseits durch eine Schrägfläche 50 der Hutmutter 28 beaufschlagbar, welche bei zunehmendem Aufschrauben der Hutmutter 28 auf das Außengewinde 26 die Lamellen des Lamellenkorbs 44 zunehmend in Richtung der Längsachse 42 deformiert und damit die in dem Lamellenkorb 44 aufgenommene Dichtung 46 ebenfalls soweit in Richtung der Längsachse 42 bewegt, daß ein innerer Durchlaß 52 an einer Kabelaußenmantelfläche 54 eines Kabels 56 dichtend mit Pressung anlegbar ist.

Das Kabel 56 verläuft dabei durch eine zur Längsachse 42 koaxiale Öffnung 58 der Hutmutter 28, dann durch den Durchlaß 52 der Dichtung 46 hindurch und passiert dann einen inneren Durchbruch 60 des Dichtungsträgers 32. Im Anschluß an den Dichtungsträger 32 erstreckt sich das Kabel 56 durch einen Innenraum 62 des Stutzens 10, welcher sich ausgehend vom Zylinderabschnitt 24 durch den Schlüsselflächenabschnitt 18 und den zylindrischen Ansatz 12 bis zu einer gehäuseseitigen Öffnung 64 des Stutzens ausdehnt. Von der gehäuseseitigen Öffnung 64 ausgehend erstreckt sich in dem Innenraum 62 ein als Ganzes mit 66 bezeichnetes Einsatzteil, welches einen Ringkörper 68 mit einer radial außenliegenden zylindrischen Fläche 70 und einen über die zylindrische Fläche 70 radial nach außen reichenden Flansch 72 aufweist, welcher an einer Stirnfläche 74 des gehäuseseitigen Endes 22 des Stutzens 10 anliegt.

Das Einsatzteil 66 weist ferner von dem Innenkörper 68 ausgehende und sich in Richtung der Längsachse 42 erstreckende Finger 76 auf, welche mit einer bezüglich der Längsachse 42 radial nach außen stehenden Rastnase 78 in eine vorzugsweise im Bereich des Schlüsselflächenabschnitts 18 liegende und sich ausgehend von der inneren Zylinderfläche 36 radial nach außen erstreckende Nut 80 im Stutzen 10 eingreift.

Das Einsatzteil 66 ist somit vom gehäuseseitigen Ende 22 her in den Innenraum 62 des Stutzens 10 einschiebbar, wobei die Finger 76 elastisch in Richtung der Längsachse 42 verbiegbar sind, so daß die Nasen 78 derselben auf der inneren zylindrischen Fläche 36 von der Öffnung 64 bis zur Nut 80 entlanggleiten und dann in die Nut 80 eingreifen und somit eine Rastverbindung mit dieser bilden, während gleichzeitig der Flansch 72 am gehäuseseitigen Ende 22 des Stutzens 10 anliegt.

Das Einsatzteil 66 trägt ein als Ganzes mit 90 bezeichnetes Schirmkontaktelement, welches mit einem in Form eines offenen Rings ausgebildeten Trägerteil 92 auf der zylindrischen Fläche 70 des Ringkörpers 68 aufliegt, wobei das Trägerteil 92 ein zu einem offenen Ring gebogener Flachmaterialstreifen ist. Zur Fixierung des Trägerteils 92 auf der Zylinderfläche 70 wird das Trägerteil 92 von von dem Flansch 72 vorspringenden Vorsprüngen 94 gehalten, welche das Trägerteil 92 auf einer der zylindrischen Fläche 70 abgewandten Außenseite 96 übergreifen, so daß das Trägerteil in einem zwischen den Vorsprüngen 94 und der zylindrischen Fläche 70 gebildeten Schlitz fixiert ist.

Von dem Trägerteil 92 erstrecken sich zwischen den Fingern 76 liegende Kontaktbügel 100, welche ein dem Trägerteil 92 abgewandtes Ende 102 mit einer V-förmigen Umbiegung 104 aufweisen, welche an einem ersten Bügelarm 106 angeordnet ist. Der erste Bügelarm 106 und ein zweiter Bügelarm 108 sind über eine knieähnliche Umbiegung 110 miteinander verbunden. Der zweite Bügelarm 108 schließt sich an eine umgekehrt V-förmige Umbiegung 112 an und diese liegt zwischen einem dritten, vom Trägerteil 92 bezüglich der Längsachse 42 radial nach außen wegführenden Bügelarm 114 und dem zweiten Bügelarm 108.

Jeder Kontaktbügel 100 dient zur Herstellung eines elektrischen Kontakts zwischen einem Kabelschirm 120, welcher auf einem Innenleiterbereich 122 des Kabels 56 und diesen umschließend anliegt. Unter dem Innenleiterbereich 122 werden alle von dem Kabelschirm 120 umschlossenen Unterbestandteile verstanden. Hierzu berührt der Kontaktbügel 100 mit der V-förmigen Umbiegung 104 den Kabelschirm 120 mit einer ersten Kontaktstelle 124. Ferner erstreckt sich jeder Kontaktbügel 100 vorzugsweise in einer durch die Längsachse 42 hindurch verlaufenden Ebene und ist in der Ebene liegend federnd bewegbar, wobei die Bügelarme 106, 108 und 114 in der Ebene liegend verbleiben.

Ferner berührt der Kontaktbügel 100 den Stutzen 10 im Bereich seiner inneren zylindrischen Fläche 36 mittels der umgekehrt V-förmigen Umbiegung 112 unter Bildung einer zweiten Kontaktstelle 126. Aufgrund der Form des Kontaktbügels 100 liegt zwischen der ersten Kontaktstelle 124 und der zweiten Kontaktstelle 126 die knieähnliche Umbiegung 110 mit dem von dieser wegführenden ersten Bügelarm 106 und dem zweiten Bügelarm 108, welche bei elastischem Material des Kontaktbügels eine Federwirkung entfaltet, die einerseits die Umbiegung 104 gegen den Kabelschirm 120 und andererseits die Umbiegung 112 gegen die innere zylindrische Fläche 36 des Stutzens 10 drückt und somit auch den elektrischen Kontakt im Bereich der ersten Kontaktstelle 124 und der zweiten Kontaktstelle 126 aufrecht erhält.

Dadurch, daß der dritte Bügelarm 114 von dem Trägerteil 92 radial nach außen bis zur umgekehrt V-förmigen Umbiegung 112 verläuft, bildet sich auch zwischen dem Trägerteil 92 und der Umbiegung 112 ein Hebelarm, welcher eine federnde Bewegung der Umbiegung 112 in Richtung der inneren zylindrischen Fläche 36 des Stutzens 10 zuläßt, so daß durch die Ausbildung des Kontaktbügels 100 aus federelastischem Material sowohl ein Kontakt im Bereich der ersten Kontaktstelle 124 als auch ein Kontakt im Bereich der zweiten Kontaktstelle 126 stets aufrechterhalten wird.

Bei der erfindungsgemäßen Kabelverschraubung ist es somit lediglich erforderlich, einen Kabelaußenmantel 130 soweit zu entfernen, daß der den Innenleiterbereich 122 umschließende Kabelschirm 120 freigelegt ist, jedoch noch nach wie vor den Innenleiterbereich 122 eng umschließt. Wird ein derart von dem Kabelaußenmantel 130 teilweise befreites Kabel 56 in die erfindungsgemäße Kabelverschraubung eingeschoben und zwar so weit, daß der freigelegte Kabelschirm 120 im Bereich des Innenraums 62 liegt, so wird automatisch mittels der mehreren Kontaktbügel 100 ein elektrischer Kontakt zwischen dem Kabelschirm 120 und dem Stutzen 10 hergestellt. Vorzugsweise wird dabei das Kabel 56 so weit eingeschoben, daß der mit dem Kabelaußenmantel 130 noch versehene Bereich im Durchlaß 52 der Dichtung 46 liegt, an daß durch Anziehen der Hutmutter 28 die Dichtung 46 zur Anlage an der Kabelaußenmantelfläche 54 bringbar und somit das Kabel 56 in der Kabelverschraubung einerseits abgedichtet und andererseits zumindest kraftschlüssig zugentlastet fixierbar ist, während gleichzeitig ein elektrischer Kontakt zwischen dem Kabelschirm 120 und dem Stutzen 10 über die Kontaktbügel 100 herstellbar ist.

## Patentansprüche

1. Kabelverschraubung umfassend einen mit einer gehäuseseitigen Öffnung (64) mit einem Gehäuse verbindbaren Stutzen (10), eine in ein Inneres des Stutzens (10) einsetzbare Dichtung (46) sowie ein mit dem Stutzen (10) verschraubbares Druckelement (28), welches auf die Dichtung (46) im Sinne eines Anlegens derselben an ein durch die Kabelverschraubung hindurchgeführbares Kabel (56) einwirkt, ein in dem Stutzen (10) angeordnetes Schirmkontaktelement (90), welches in elektrischem Kontakt mit dem Stutzen (10) steht und mittels mindestens eines in Richtung des hindurch führbaren Kabels (56) reichenden Kontaktbügels (100) einen einen Innenleiterbereich (122) des Kabels (56) umschließenden Kabelschirm (120) mit einer ersten Kontaktstelle (124) zu kontaktieren vermag, **dadurch gekennzeichnet, daß** das Schirmkontaktelement (90) an einem in den Stutzen (10) einführbaren Einsatzteil (66) aus Kunststoff gehalten ist, daß das Schirmkontaktelement (90) auf einer radial außenliegenden zylindrischen Fläche (70) des Einsatzteils (66) aufliegt, daß das Schirmkontaktelement (90) mittels des Einsatzteils (66) in dem Stutzen (10) lokal fixierbar ist, und daß das Schirmkontaktelement (90) unmittelbar mit dem Stutzen (10) elektrisch verbindbar ist.

2. Kabelverschraubung nach Anspruch 1, **dadurch gekennzeichnet, daß** der Kontaktbügel (100) in einer ungefähr parallel zu einer Längsachse (42) der Kabelverschraubung verlaufenden Ebene bewegbar ist.

3. Kabelverschraubung nach Anspruch 1 oder 2, **dadurch gekennzeichnet, daß** das Schirmkontaktelement (90) mehrere Kontaktbügel (100) aufweist.

4. Kabelverschraubung nach einem der voranstehenden Ansprüche, **dadurch gekennzeichnet, daß** der Kontaktbügel (100) den Stutzen (10) mit einer zweiten Kontaktstelle (126) unmittelbar kontaktiert.

5. Kabelverschraubung nach einem der voranstehenden Ansprüche, **dadurch gekennzeichnet, daß** der Kontaktbügel (100) eine knieähnliche Umbiegung (110) aufweist, die zwischen der ersten (124) und der zweiten (126) Kontaktstelle liegt.

6. Kabelverschraubung nach einem der voranstehenden Ansprüche, **dadurch gekennzeichnet, daß** der Kontaktbügel (100) im Bereich der ersten Kontaktstelle (124) eine erste Umbiegung (104) aufweist.

7. Kabelverschraubung nach Anspruch 6 **dadurch gekennzeichnet, daß** der Kontaktbügel (100) im Bereich der zweiten Kontaktstelle (126) eine zweite Umbiegung (112) aufweist.

8. Kabelverschraubung nach einem der voranstehenden Ansprüche, **dadurch gekennzeichnet, daß** das Schirmkontaktelement (90) ein Trägerteil (92) aufweist, an welchem die Kontaktbügel (100) gehalten sind.

9. Kabelverschraubung nach Anspruch 8, **dadurch gekennzeichnet, daß** der Kontaktbügel (100) relativ zum Trägerteil (92) bewegbar ist und daß das Trägerteil (92) relativ zum Stutzen (10) fixiert angeordnet ist.

10. Kabelverschraubung nach Anspruch 8 oder 9, **dadurch gekennzeichnet, daß** das Trägerteil (92) im Abstand von einer Innenwand (36) des Stutzens (10) liegt und daß der Kontaktbügel von dem Trägerteil (92) ausgehend zu einer (124) und dann zur anderen (126) Kontaktstelle verläuft.

11. Kabelverschraubung nach einem der voranstehenden Ansprüche, **dadurch gekennzeichnet, daß** das am Einsatzteil (66) gehaltene Schirmkontaktelement (90) von einem gehäuseseitigen Ende (22) des Stutzens (10) in diesen einsetzbar ist.

12. Kabelverschraubung nach einem der voranstehenden Ansprüche, **dadurch gekennzeichnet, daß** das Einsatzteil (66) über eine Rastverbindung (78, 80) am Stutzen (10) fixierbar ist.

13. Kabelverschraubung nach einem der Ansprüche 8-12, **dadurch gekennzeichnet, daß** das Schirmkontaktelement (90) durch das an dem Einsatzteil (66) sitzende Trägerteil (92) am Einsatzteil gehalten ist.

14. Kabelverschraubung nach einem der voranstehenden Ansprüche, **dadurch gekennzeichnet, daß** das Schirmkontaktelement (90) mit einem Trägerteil (92) auf einem Ringkörper (68) des Einsatzteils (66) mit der radial außenliegenden zylindrischen Fläche (70) aufliegt.

15. Kabelverschraubung nach Anspruch 15, **dadurch gekennzeichnet, daß** das auf der radial außenliegenden zylindrischen Fläche aufliegende Trägerteil (92) in Form eines offenen Rings ausgebildet ist.

16. Kabelverschraubung nach einem der Ansprüche 8-15, **dadurch gekennzeichnet, daß** sich von dem Trägerteil (92) ausgehend zwischen Fingern (76) des Einsatzteils (90) liegende Kontaktbügel (100) erstrecken.

## Claims

1. A cable gland comprising a connection piece (10) which is connectible to a housing and incorporates an opening (64) at the housing side thereof, a seal (46) which is insertable into the interior of the connection piece (10) and a compression element (28) which is adapted to be screwed onto the connection piece (10) and is effective on the seal (46) in the sense of causing the latter to be pressed against a cable (56) which is insertable through the cable gland, a screen contact element (90) which is arranged in the connection piece (10), is in electrical contact with the connection piece (10) and enables contact to be made with a cable screen (120) surrounding an inner conductor region (122) of the cable (56) at a first contact point (124) by means of at least one sliding bow contact (100) which extends towards the insertable cable (56), **characterised in that** the screen contact element (90) is retained on an insert member (66) of synthetic material which is insertable into the connection piece (10), **in that** the screen contact element (90) rests on a radially outward cylindrical surface (70) of the insert member (66), **in that** the screen contact element (90) is fixable locally in the connection piece (10) by means of the insert member (66) and **in that** the screen contact element (90) is electrically connectable directly to the connection piece.

2. A cable gland in accordance with Claim 1, **characterised in that** the sliding bow contact (100) is moveable in a plane extending approximately parallel to a longitudinal axis (42) of the cable gland.

3. A cable gland in accordance with Claim 1 or 2, **characterised in that** the screen contact element (90) comprises a plurality of sliding bow contacts (100).

4. A cable gland in accordance with any of the preceding Claims, **characterised in that** the sliding bow contact (100) makes direct contact with the connection piece (10) at a second contact point (126).

5. A cable gland in accordance with any of the preceding Claims, **characterised in that** the sliding bow contact (100) has a knee-like bend (110) located between the first (124) and the second (126) contact point.

6. A cable gland in accordance with any of the preceding Claims, **characterised in that** the sliding bow contact (100) has a first bend (104) in the region of the first contact point (124).

7. A cable gland in accordance with Claim 6, **characterised in that** the sliding bow contact (100) has a second bend (112) in the region of the second contact point (126).

8. A cable gland in accordance with any of the preceding Claims, **characterised in that** the screen contact element (90) comprises a support portion (92) on which the sliding bow contacts (100) are mounted.

9. A cable gland in accordance with Claim 8, **characterised in that** the sliding bow contact (100) is moveable relative to the support portion (92), and **in that** the support portion (92) is fixed relative to the connection piece (10).

10. A cable gland in accordance with Claim 8 or 9, **characterised in that** the support portion (92) is spaced from an interior wall (36) of the connection piece (10), and **in that** the sliding bow contact extends away from the support portion (92) towards one (124) and then towards the other (126) contact point.

11. A cable gland in accordance with any of the preceding Claims, **characterised in that** the screen contact element (90) retained on the insert member (66) is insertable into the connection piece (10) from a housing-side end (22) thereof.

12. A cable gland in accordance with any of the preceding Claims, **characterised in that** the insert member (66) is fixable on the connection piece (10) by means of a snap-in connection (78, 80).

13. A cable gland in accordance with any of the Claims 8 - 12, **characterised in that** the screen contact element (90) is retained on the insert member by means of the support portion (92) which is seated on the insert member (66).

14. A cable gland in accordance with any of the preceding Claims, **characterised in that** a support portion (92) of the screen contact element (90) rests on an annular body (68) of the insert member (66) comprising the radially outward cylindrical surface (70).

15. A cable gland in accordance Claim 15 [sic], **characterised in that** the support portion (92) resting on the radially outward cylindrical surface is in the form of an open ring.

16. A cable gland in accordance with any of the Claims 8 - 15, **characterised in that**, starting from the support portion (92), sliding bow contacts (100) extend between fingers (76) of the insert member (90).

## Revendications

1. Presse-étoupe pour câble, comprenant une tubulure (10) susceptible d'être reliée à un boîtier par une ouverture (64) située côté boîtier, un joint d'étanchéité (46) pouvant être inséré à l'intérieur de la tubulure (10), ainsi qu'un élément de pressage (28) pouvant être vissé à la tubulure (10), élément de pressage agissant sur le joint d'étanchéité (46) dans le sens d'une application de celui-ci sur un câble (56) susceptible d'être passé par le presse-étoupe, un élément à contact de blindage ou écrantage (90), disposé dans la tubulure (10), élément mis en contact électrique avec la tubulure (10) et permettant d'établir un contact, à l'aide d'au moins un étrier de contact (100) arrivant dans la direction du câble (56) pouvant être passé, d'un blindage ou écran de câble (120), entourant une zone de conducteur intérieur (122) du câble (56), avec un premier point de contact (124), **caractérisé en ce que** l'élément de contact de blindage (90) repose sur une pièce d'insert (66) pouvant être insérée dans la tubulure (10), pièce réalisée en matière synthétique, **en ce que** l'élément de contact de blindage (90) repose sur une face (70) cylindrique radialement extérieure de la pièce d'insert (66), **en ce que** l'élément de contact de blindage (90) est susceptible d'être fixé localement dans la tubulure (10) à l'aide de la pièce d'insert (66) et **en ce que** l'élément de contact de blindage (90) est susceptible d'être relié électriquement, directement, à la tubulure (10).

2. Presse-étoupe selon la revendication 1, **caractérise en ce que** l'étrier de contact (100) est déplaçable dans un plan s'étendant à peu près parallèlement à un axe longitudinal (42) du presse-étoupe.

3. Presse-étoupe selon la revendication 1 ou 2,
**caractérisé en ce que** 1 'élément de contact de blindage (90) présente plusieurs étriers de contact (100).

4. Presse-étoupe selon l'une des revendications précédentes, **caractérisé en ce que** l'étrier de contact (100) met en contact direct la tubulure (10) avec un deuxième point de contact (126).

5. Presse-étoupe selon l'une des revendications précédentes, **caractérisé en ce que** l'étrier de contact (100) présente un repli (110) analogue à un genou, placé entre le premier point de contact (124) et le deuxième point de contact (126).

6. Presse-étoupe selon l'une des revendications précédentes, **caractérisé en ce que** l'étrier de contact (100) présente un premier repli (104) dans la zone du premier point de contact (124).

7. Presse-étoupe selon la revendication 6, **caractérisé en ce que** l'étrier de contact (100) présente un deuxième repli (112) dans la zone du deuxième point de contact (126).

8. Presse-étoupe selon l'une des revendications précédentes, **caractérisé en ce que** l'élément de contact de blindage (90) présente une pièce support (92) sur laquelle sont maintenus les étriers de contact (100).

9. Presse-étoupe selon la revendication 8, **caractérisé en ce que** l'étrier de contact (100) est déplaçable par rapport à la pièce support (92), et **en ce que** la pièce support (92) est disposée en étant fixée par rapport à la tubulure (10).

10. Presse-étoupe selon la revendication 8 ou 9, **caractérisé en ce que** la pièce support (92) est située à distance d'une paroi intérieure (36) de la tubulure (10), et **en ce que** l'étrier de contact s'étend, en partant de la pièce support (92), vers un point de contact (124), puis vers l'autre point de contact (126).

11. Presse-étoupe selon l'une des revendications précédentes, **caractérisé en ce que** l'élément de contact de blindage (90) maintenu sur la pièce d'insert (66) est susceptible d'être inséré depuis une extrémité (22), située côté boîtier, de la tubulure (10), dans celle-ci.

12. Presse-étoupe selon l'une des revendications précédentes, **caractérisé en ce que** la pièce d'insert (66) est susceptible d'être fixée sur la tubulure (10) par l'intermédiaire d'une liaison à encliquetage (78, 80).

13. Presse-étoupe selon l'une des revendications 8 à 12, **caractérisé en ce que** l'élément de contact de blindage (90) est maintenu sur la pièce d'insert au moyen de la pièce support (92) montée sur la pièce d'insert (66).

14. Presse-étoupe selon l'une des revendications précédentes, **caractérisé en ce que** l'élément de contact de blindage (90) repose par une pièce support (92) sur un corps annulaire (68) de la pièce d'insert (66), par la face (70) cylindrique située radialement extérieurement.

15. Presse-étoupe selon la revendication 14, **caractérisé en ce que** la pièce support (92) reposant sur la face cylindrique radialement extérieure est configurée en anneau ouvert.

16. Presse-étoupe selon l'une des revendications 8 à 15, **caractérisé en ce qu'**en partant de la pièce support (92), s'étendent des étriers de contact (100), placés entre des doigts (76) de la pièce d'insert (90).
